Europäisches Patentamt

(19) European Patent Office

Office européen des brevets

(11) Publication number: **0 198 525**
**B1**

(12) # EUROPEAN PATENT SPECIFICATION

(45) Date of publication of the patent specification:
05.07.89

(21) Application number: **86200377.9**

(22) Date of filing: **10.03.86**

(51) Int. Cl.⁴: **G03B 27/80**

(54) A device for determining a value representative of the amount of weak information of an original.

(30) Priority: **14.03.85 NL 8500731**

(43) Date of publication of application:
**22.10.86 Bulletin 86/43**

(45) Publication of the grant of the patent:
**05.07.89 Bulletin 89/27**

(84) Designated Contracting States:
**DE FR GB NL**

(56) References cited:
**EP-A- 0 108 440**
**US-A- 3 202 042**
**US-A- 3 981 579**

(73) Proprietor: **Océ-Nederland B.V., St. Urbanusweg 43,
NL-5914 CC Venlo(NL)**

(72) Inventor: **van Otterdijk, Franciscus Wilhelmus,
Tichelerhof 16, NL-5944 ER Arcen(NL)**

(74) Representative: **Hanneman, Henri W.A.M. et al,
Océ-Nederland B.V. Patents and Information
Postbus 101, NL-5900 MA Venlo(NL)**

## Description

This invention relates to a device for determining a value representative of the amount of weak information of an original, comprising a detection device which by reference to a measurement signal representing the optical density of a part of the original detects the presence of at least first lines above a first intensity and second lines above a second intensity, and an interpretation device which in dependence on the number of times that the presence of first and second lines is detected determines the value representative of the amount of weak information.

A device of this kind is known from European Patent Application No. 108440. In the known device a strip of the original is scanned by means of a photoelectric sensor. The latter generates a waveform signal, the level of which is representative of the optical density of the scanned strip. Lines occurring on the original are represented in the measurement signal by peaks. The peak height is representative of optical density of a line. Comparator circuits are used to detect those (first) parts of the measurement signal which exceed a first level and those (second) parts of the measurement signal which exceed a second level. Each detected first part indicates the presence of a first line. Each detected second part indicates the presence of a second line. A representative of the amount of weak information is derived from the number of first and second parts detected.

The known device has proved to be very sensitive to measurement signal interference in the form of noise.

Such noise influences the number of intersections of the first and second levels and hence also the number of detected first and second parts of the measurement signal. The representative of the amount of weak information derived from this influenced number is accordingly unreliable.

The object of this invention is therefore to provide a device which determines a reliable representative of the amount of weak information even under conditions in which the measurement signal has a high noise level interference.

According to the invention this object is attained in a device according to the introduction, in that the detection device is provided with means which allow only detection of high-frequency changes in the measurement signal and detect the presence of a first line if the magnitude of the detected change exceeds a first reference value and detect the presence of a second line if the magnitude of the detected change exceeds a specific second reference value.

In the device according to the invention the changes in optical density are detected. These changes represent the contour of a line. The magnitude of the change represents the intensity of the line. The magnitude of the changes has been found to be virtually uninfluenced by noise, so that the device according to the invention enables reliable results to be obtained even in cases in which the measurement signal has high noise interference.

The invention and further advantages thereof will be described hereinafter in detail with reference to the accompanying drawings wherein:

Fig.1 is a diagram of a device according to the invention,

Fig.2 represents examples of signals occurring in a device according to the invention,

Fig.3 represents a flow diagram of part of the program for determining a value representative of the amount of weak information:

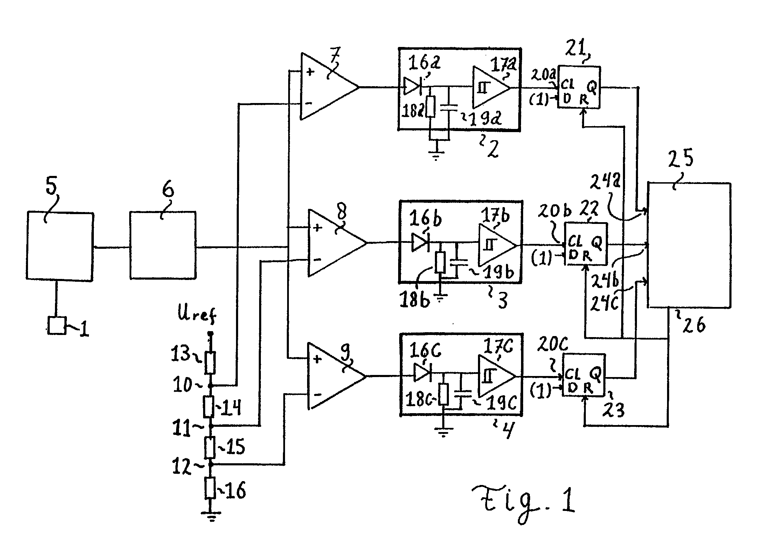

The device according to Fig.1 comprises a sensor 1 which can be disposed at a suitable place along a conveying path of an original in order to scan a strip of an original passing the sensor in order to determine the optical density of said strip. In these conditions sensor 1 generates a signal which is dependent upon the optical density of the scanned part of the original, this signal being converted by an amplifier circuit 5 into a voltage Vm, the level of which is a value representative of the optical density of the scanned part.

Voltage Vm is delivered to a high-pass filter 6 of conventional type. The output of high-pass filter 6 is connected to the positive inputs of comparator circuits 7, 8 and 9. The negative inputs of the comparator circuits 7, 8 and 9 are respectively connected to the tappings 10, 11 and 12 of a voltage divider formed by the series connection of resistors 13, 14, 15 and 16, the voltage divider being connected to a constant voltage $U_{ref}$. Comparator circuits 7, 8 and 9 are of conventional type which generate a logic 1 signal if the voltage at the positive input is higher than the voltage at the negative input and which generate a logic 0 signal if the voltage at the negative input is higher than the voltage at the positive input. The outputs of comparator circuits 7, 8 and 9 are respectively connected to the inputs of pulse widening circuits 2, 3 and 4. The inputs of these circuits 2, 3 and 4 are named according to the anodes of the diodes 16a, 16b and 16c respectively. The cathodes of diodes 16a, 16b and 16c are respectively connected to the inputs of Schmitt trigger circuits 17a, 17b and 17c.

The cathode of diode 16a is also connected to earth potential via a parallel circuit comprising a resistor 18a and a capacitor 19a, the cathode of diode 16b is connected to earth potential via a parallel circuit comprising a resistor 18b and a capacitor 19b, and the cathode of diode 16c is connected to earth potential via a parallel circuit comprising a resistor 18c and a capacitor 19c. Each of the pulse widening circuits 2, 3 and 4 follows the input signal on a 0-1 transition of said signal. In the case of a 1-0 transition of the input signal, however, the output signal of a pulse widening circuit is kept at the logic 1 level for a specific time. The outputs of the Schmitt trigger circuits 17a, 17b and 17c are respectively connected to the clock inputs 20a, 20b and 20c of flank-controlled D-flip-flops 21, 22 and 23. A logic 1 signal is delivered continuously to the D-inputs of the flip-flops 21, 22 and 23. The outputs of the flip-flops 21, 22 and 23 are respectively connected to the input gates 24a, 24b and 24c of a microcomputer 25. The reset inputs R of the flip-flops 21, 22 and 23 are connected to the output gate 26 of microcomputer 25.

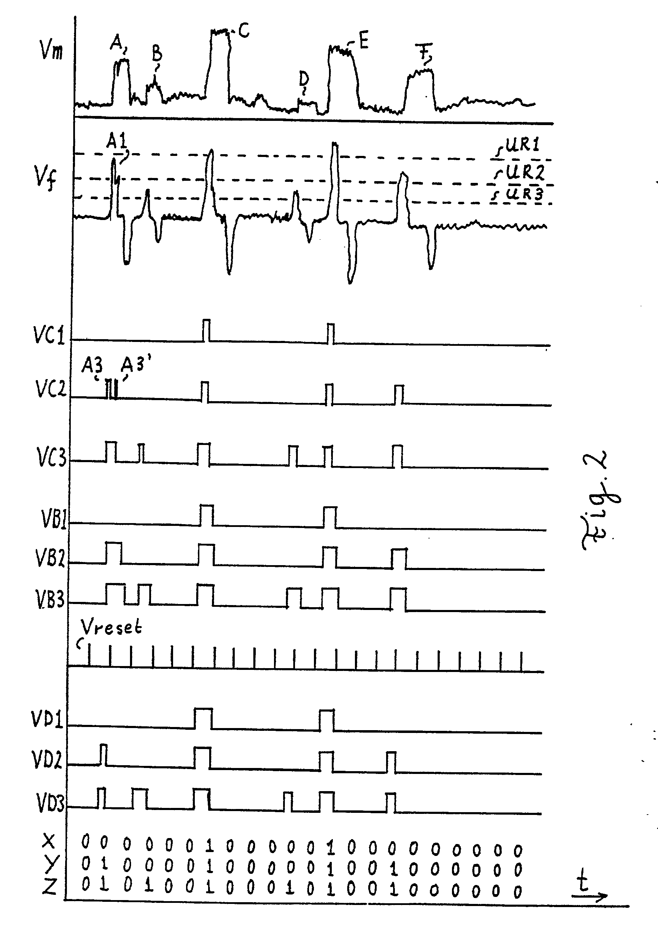

Fig.2 is an example of a measurement signal Vm having noise interference. Vm represents the optical density of a part of the original scanned by sensor 1. The peaks B and D represent the optical densities of weak lines, e.g. thin pencil lines on a working drawing. The peaks C and E represent the optical densities of strong lines. The peaks A and F represent the optical densities of lines of medium intensity. Measurement signal Vm is delivered to high-pass filter 6. The filtered measurement signal is indicated by Vf. The peaks in signal Vf represent the changes in the optical density of the scanned part of the original. References UR1, UR2 and UR3 respectively denote the levels at the negative inputs of comparator circuits 7, 8 and 9. References VC1, VC2 and VC3 respectively denote the output signals of the comparator circuits 7, 8 and 9. References VB1, VB2 and VB3 respectively denote the output signals of the pulse widening circuits 2, 3 and 4.

The number of pulses in signal VB1 indicates the number of times that a peak higher than UR1 is detected in signal Vf. This number corresponds to the number of strong lines within the scanned part of the original. Similarly, the number of pulses in VB2, or VB3 respectively, indicate the number of times that a peak higher than UR2, or UR3 respectively, is detected in signal Vf. The number of pulses in signal VB2 represents the total number of lines less the number of strong lines. Similarly, the number of pulses in VB3 indicates the total number of detected lines.

In the detection of the number of peaks, the use of pulse widening circuits has the consequence that any high-frequency interference superimposed on the peaks in signal Vf (e.g. peak A1) has no influence on the number of pulses in the signals VB. High-frequency interference of this kind may result in a number of undesirable intersections of the signal Vf and a reference voltage. This leads to a series of short consecutive pulses in the output signal of a comparator circuit (see for example pulses A3 and A3'). By lengthening each pulse by means of a pulse widening circuit a series of pulses of this kind is converted into one long pulse, so that the high-frequency interferences have no effect on the number of pulses generated by the pulse widening circuit. Preferably, the time by which the pulses are lengthened is smaller than the time corresponding to the width of the narrowest line still adapted to be detected. The result of a 0-1 transition in signal VB1 is that flip-flop 21 is loaded with the logic value 1 on the D-input. Similarly, the flip-flops 22 and 23 are loaded by means of signal VB2 and VB3 respectively. The contents of the flip-flops are periodically read by microcomputer 25 and the flip-flops are set to 0 after each reading by means of a reset pulse on output gate 26. The interval of time between two consecutive reset pulses is preferably shorter than the time by which a pulse widening circuit lengthens the pulses originating from the corresponding comparator circuit.

The output signals of the flip-flops 21, 22 and 23 are respectively denoted by VD1, VD2 and VD3. The states of the flip-flops 21, 22 and 23 as read by micro-computer 25 are respectively indicated by X, Y and Z.

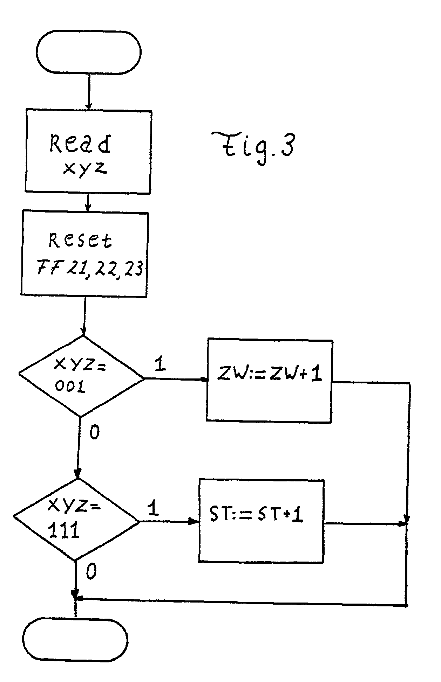

Fig.3 represents a flow diagram of a program which determines the numbers of weak and strong lines from the combinations read. This program is periodically called up. First of all the output signals of the flip-flops 21, 22 and 23 respectively are read via the input gates 24a, 24b and 24c. A reset pulse is then generated at output gate 26. The read-in combination X, Y and Z is then compared with the combinations 001 and 111. The combination 001 represents a weak line. The combination 111 represents a strong line. If comparison shows that the combination X, Y and Z corresponds to 001, the variable ZW indicating the number of detected weak lines is increased by 1. If comparison shows that the combination X, Y, Z corresponds to 111, the variable ST indicating the number of detected strong lines is increased by 1. After the original has passed sensor 1, microcomputer 25 derives from the variables ZW and ST a value representative of the amount of weak information on the original. The ratio of ZW to ST appears to be a good measure of this.

The value calculated by microcomputer 25 can be used so to influence the process parameters of a copying machine that copies with a white background are made in cases in which there is practically no weak information on the original to be copied and that copies with a tinted background are made in cases in which there is a considerable amount of weak information on the original.

The device according to the invention is particularly suitable for use in conditions in which noise interference is inevitable or practically inevitable in the measurement signal. Conditions of this kind may occur, for example, in fast copying machines for copying large size working drawings recorded on microfilm, where the value representative of the amount of weak information must be known, prior to starting the copying process, in order to adjust the process parameters determining the background. To determine the value it is then necessary to detect the presence of very thin (10-50 μm) weak lines, so that the sensor is required to have a high resolution. Because of this required high resolution, the energy content of the signal generated by the sensor will be very small, so that the signal/noise ratio of the measurement signal obtained by amplification of the generated signal will be small.

The device according to the invention is also very suitable for processing measurement signals representing optical densities of originals of which the optical density of the background differs from place to place.

The invention is of course not limited to the embodiment described. Various alternative embodiments are possible. For example, the sensor may be a photoelectric cell which is moved over a stationary original. In other embodiments the sensor may consist of an array of photoelectric cells which at a specific moment measures the optical density at a number of places and transmits the resulting information per photoelectric cell to circuits coupled thereto. From the total of weak and strong lines detected by all the circuits it is then possible to determine a value representative of the amount of weak information.

## Claims

1. A device for determining a value representative of the amount of weak information of an original, comprising a detection device which by reference to a measurement signal (Vm) representing the optical density of a part of the original detects the presence of at least first lines above a first intensity and second lines above a second intensity, and an interpretation device (25) which in dependence on the number of times that the presence of first and second lines is detected determines the value representative of the amount of weak information, characterised in that the detection device is provided with means (6,7,9,2,4) which allow only detection of high-frequency changes in the measurement signal (Vm) and detect the presence of a first line if the magnitude of the detected change exceeds a first reference value (UR1) and detect the presence of a second line if the magnitude of the detected change exceeds a specific second reference value (UR3).

2. A device according to claim 1, characterised in that the detection device is provided with a high-pass filter (6) for filtering the measurement signal (Vm) in order to generate a signal (Vf) which represents only the high-frequency changes in the measurement signal (Vm), at least a first (7) and a second (9) comparator circuit for comparing the filtered measurement signal (Vf) with the first reference value (UR1) and the second reference value (UR3) respectively, said comparator circuits (7,9) generating a first output put signal (VC1) and a second output signal (VC3) respectively during the time that the first reference value (UR1) and the second reference value (UR3) respectively are exceeded, and at least a first (2) and a second (4) signal widening circuit which by lengthening the first output signal (VC1) and the second output signal (VC3) respectively derive a first detection pulse (VB1) and second detection pulse (VB3) respectively, the first detection pulse (VB1) indicating that the presence of a first line has been detected and the second detection pulse (VB3) indicating that the presence of a second line has been detected.

## Revendications

1. Dispositif de détermination d'une valeur représentant la valeur d'information faible d'un original, comportant un dispositif de détection qui, par référence à un signal de mesure (Vm) représentant la densité optique d'une partie de l'original, détecte la présence d'au moins des premières lignes au-dessus d'une première intensité et des secondes lignes au-dessus d'une seconde intensité et un dispositif d'interprétation (25) qui, en fonction du nombre de fois que la présence des premières et des secondes lignes a été détectée, détermine la valeur représentant la valeur d'information faible, caractérisé en ce que le dispositif de détection comporte des moyens (6, 7, 9, 2, 4) qui ne permettent la détection que de changements à haute fréquence dans le signal de mesure (Vm) et qui détectent la présence d'une première ligne si l'amplitude du changement détecté dépasse une première valeur de référence (UR1) et qui détectent la présence d'une seconde ligne si l'amplitude du changement détecté dépasse une seconde valeur de référence spécifique (UR3).

2. Dispositif selon la revendication 1, caractérisé en ce que le dispositif de détection comporte un filtre passe-haut (6) pour filtrer le signal de mesure (Vm) afin de produire un signal (Vf) qui représente seulement les changements à haute fréquence dans le signal de mesure (Vm), au moins un premier (7) et un second (9) circuits comparateurs pour comparer le signal de mesure filtré (Vf) avec la première valeur de référence (UR1) et la seconde valeur de référence (UR3) respectivement, lesdits circuits comparateurs (7, 9) produisant un premier signal de sortie (VC1) et un second signal de sortie (VC3) respectivement pendant le temps où la première valeur de référence (UR1) et la seconde valeur de référence (UR3) respectivement sont dépassées et au moins un premier (2) et un second (4) circuits d'allongement de signaux qui, en allongeant le premier signal de sortie (VC1) et le second signal de sortie (VC3) respectivement, dérivent une première impulsion de détection (VB1) et une seconde impulsion de détection (VB3) respectivement, la première impulsion de détection (VB1) indiquant que la présence d'une première ligne a été détectée et la seconde impulsion de détection (VB3) indiquant que la présence d'une seconde ligne a été détectée.

## Patentansprüche

1. Vorrichtung für die Bestimmung eines Wertes, der die Stärke einer schwachen Information eines Originals wiedergibt, mit einer Erfassungseinrichtung, die anhand eines die optische Dichte eines Teils des Originals repräsentierenden Meßsignals (Vm) wenigstens das Vorhandensein erster Linien oberhalb einer ersten Intensität und zweiter Linien oberhalb einer zweiten Intensität feststellt, und einer Interpretationseinrichtung (25), die in Abhängigkeit von der Anzahl der Fälle, in denen das Vorhandensein von ersten und zweiten Linien festgestellt wurde, den Wert bestimmt, der die Stärke der schwachen Information wiedergibt, dadurch gekennzeichnet, daß die Erfassungseinrichtung mit Mitteln (6, 7, 9, 2, 4) versehen ist, die nur die Erfassung von hochfrequenten Änderungen des Meßsignals (Vm) gestatten und das Vorhandensein einer ersten Linie feststellen, wenn die Größe der erfaßten Änderung einen ersten Bezugswert (UR1) überschreitet, und das Vorhandensein einer zweiten Linie feststellen, wenn die Größe der erfaßten Änderung einen bestimmten zweiten Bezugswert (UR3) überschreitet.

2. Vorrichtung nach Anspruch 1, dadurch gekennzeichnet, daß die Erfassungseinrichtung ein Hochpaßfilter (6) zum Filtern des Meßsignals (Vm) und zur Erzeugung eines Signals (Vf), das nur die hochfrequenten Änderungen des Meßsignals (Vm) wiedergibt, wenigstens eine erste (7) und eine zweite (9) Komparatorschaltung zum Vergleichen des gefilterten Meßsignals (Vf) mit dem ersten Bezugswert (UR1) bzw. dem zweiten Bezugswert (UR3), wobei die Komparatorschaltungen (7, 9) während der Zeit, in der der erste Bezugswert (UR1) bzw. der zweite Bezugswert (UR3) überschritten werden, ein erstes Ausgangssignal (VC1) bzw. ein zweites Ausgangssignal (VC3) erzeugen, und wenigstens eine erste (2) und eine zweite (4) Signalverbreiterungsschaltung aufweist, die durch Verlängern des ersten Ausgangssignals (VC1) bzw. des zweiten Ausgangssignals (VC3) einen ersten Abtastpuls (VB1) bzw. einen zweiten Abtastpuls (VB3) erzeugen, wobei der erste Abtastpuls (VB1) anzeigt, daß das Vorhandensein einer ersten Linie festgestellt wurde, und der zweite Abtastpuls (VB3) anzeigt, daß das Vorhandensein einer zweiten Linie festgestellt wurde.

Fig. 1

Fig. 2

Fig.3

```
        ┌────────┐
        │        │
        └────────┘
             │
             ▼
      ┌─────────────┐
      │   Read      │
      │    xyz      │
      └─────────────┘
             │
             ▼
      ┌─────────────┐
      │   Reset     │
      │ FF 21,22,23 │
      └─────────────┘
             │
             ▼
          ╱─────╲                  ┌─────────────┐
         ╱ xyz=  ╲      1          │             │
         ╲  001  ╱ ──────────────▶ │  ZW:= ZW+1  │
          ╲─────╱                  │             │
             │ 0                   └─────────────┘
             ▼
          ╱─────╲                  ┌─────────────┐
         ╱ xyz=  ╲      1          │             │
         ╲  111  ╱ ──────────────▶ │  ST:= ST+1  │
          ╲─────╱                  │             │
             │ 0                   └─────────────┘
             ▼
        ┌────────┐
        │        │
        └────────┘
```